Europäisches Patentamt

European Patent Office

Office européen des brevets

(11) Veröffentlichungsnummer: **0 105 869**
A2

(12) **EUROPÄISCHE PATENTANMELDUNG**

(21) Anmeldenummer: **83890172.6**

(22) Anmeldetag: **03.10.83**

(51) Int. Cl.³: **H 02 M 3/155**
**H 02 P 13/32**

(30) Priorität: **04.10.82 AT 3668/82**

(43) Veröffentlichungstag der Anmeldung:
**18.04.84 Patentblatt 84/16**

(84) Benannte Vertragsstaaten:
**AT DE FR GB**

(71) Anmelder: **Friedmann & Maier Aktiengesellschaft**
**Friedmannstrasse 7**
**A-5400 Hallein bei Salzburg(AT)**

(72) Erfinder: **Brasseur, Georg, Dipl.-Ing.**
**Eisslergasse 20**
**A-1130 Wien(AT)**

(74) Vertreter: **Gibler, Ferdinand, Dipl.Ing.Dr.tech.**
**Singerstrasse 8**
**A-1010 Wien(AT)**

(54) **Elektronischer Schalter.**

(57) Elektronischer Schalter, insbesondere für ein Schaltnetzteil, zum Schalten eines von der Masse verschiedenen Potentials, wobei der Schalter zwei in Darlington-Schaltung angeordnete Transistoren (T1,T2) aufweist und jener Transistor (T1) an dessen Emitter-Kollektorstrecke die Eingangs- und die Ausgangsspannung ansteht, mit seiner Basis außer mit der Emitter-Kollektorstrecke des zweiten Transistors (T2) auch mit einem über einen Schalter (S1) steuerbaren, gegebenenfalls eine Stromquelle (J1) aufweisenden Strompfad zur Versorgung mit Basisstrom verbindbar ist, der mit einem, gegebenenfalls von einem Regler (R) beaufschlagten, Steuerschalter (S2) verbunden ist, an dem auch der mit der Basis des zweiten Transistors (T2) verbundene, gegebenenfalls eine Stromquelle (J2) aufweisende Strompfad zur Versorgung mit Basisstrom verbunden ist.

EP 0 105 869 A2

0105869

Die Erfindung bezieht sich auf einen elektronischen Schalter, insbesondere für ein Schaltnetzteil, zum Schalten eines von der Masse verschiedenen Potentials.

Derartige Schalter werden meist durch einen einfachen Transistor, der als sogenannter Längstransistor geschaltet ist und das von Masse verschiedene Potential einer Spannungsquelle mit einem eine Induktivität und bzw. oder eine Kapazität aufweisenden Lastkreis verbindet. Dabei wird der Transistor zumeist von einem Rechteckoszillator mit variablem Tastverhältnis angesteuert, wobei das Tastverhältnis in Abhängigkeit von der Ausgangsspannung bzw. der Spannung am Lastkreis gesteuert wird.

Dabei ergibt sich der Nachteil, daß erhebliche Leistungsverluste auch durch die Ansteuerung entstehen, die als Verlustwärme abgeführt werden müssen.

Ziel der Erfindung ist es, einen elektronischen Schalter vorzuschlagen, der sich im Hinblick auf seine Verlustbilanz an die jeweiligen Verhältnisse optimal anpassen läßt und der sich insbesondere sowohl bei großen wie auch bei kleinen Differenzen zwischen Eingangs- und Ausgangsspannung bewährt. Erfindungsgemäß wird dies dadurch erreicht, daß der Schalter zwei in Darlington-Schaltung angeordnete Transistoren aufweist und jener Transistor an dessen Emitter-Kollektorstrecke die Eingangs- und die Ausgangsspannung ansteht, mit seiner Basis außer mit der Emitter-Kollektorstrecke des zweiten Transistors auch/einem über einen Schalter steuerbaren, gegebenenfalls mit eine Stromquelle aufweisenden Strompfad zur Versorgung mit Basisstrom verbindbar ist, der mit einem gegebenenfalls von einem Regler beaufschlagten Steuerschalter verbunden ist, an dem auch der mit der Basis des zweiten Transistors verbundene, gegebenenfalls eine Stromquelle aufweisende Strompfad zur Versorgung mit Basisstrom verbunden ist. Auf diese Weise ist es möglich die Transistoren des elektronischen Schalters je nach den Gegebenheiten wahlweise in Darlington-Schaltung zu betreiben oder durch direkte Ansteuerung der Basis jenes Transistors, an dessen Emitter-Kollektorstrecke die Eingangs- und die Ausgangsspannung ansteht nur über diese zu schalten. Dabei ergeben sich im Hinblick auf die Verlustbilanz verschiedene Verhältnisse. So ist es möglich, bei einer nur geringen Differenz zwischen der Eingangs- und der Ausgangsspannung die Basis jenes Transistors, an dessen Emitter-Kollektorstrecke die Eingangs- und die Ausgangsspanung ansteht, über den vom Schalter gesteuerten Strompfad mit Basisstrom zu versorgen. Dadurch wird der zweite Transistor der Darlington-Schaltung wirkungslos und es ergeben sich aufgrund der geringen Sättigungsspannung der Emitter-Kollektorstrecke geringe vom Laststrom abhängige Verluste, wobei aber auch die geringe Sättigungsspannung auch bei einer geringen Differenz zwischen Eingangs- und Ausgangsspannung von z.B. 0,5V noch ein einwandfreies Arbeiten des Schalters gewährleistet ist. Allerdings ergeben sich bei einem derartigen Betrieb größere Verluste bei der Ansteuerung, da nur die Verstärkung des einen Transistors wirksam ist. Ist dagegen der Unterschied zwischen der Eingangs- und der Ausgangsspannung groß, so können die beiden Transistoren in Darlington- Schaltung betrieben werden, wodurch sich die Verluste in der Ansteuerung drastisch vermindern, allerdings die vom Laststrom abhängigen Verluste aufgrund des größeren Spannungsabfalls über den beiden Transistoren ansteigen.

Nach einem weiteren Merkmal der Erfindung ist vorgesehen, daß der Schalter der den an die Basis jenes Transistors an dessen Emitter-Kollektorstrecke die Eingangs- und die Ausgangsspannung ansteht, angeschlossenen Strompfad schaltet, von einem Komparator gesteuert ist, der die Eingangsspannung des elektronischen Schalters mit einer Referenzschaltung vergleicht. Damit läßt sich auf einfache Weise eine selbsttätige Umschaltung von einem Betriebszustand in den anderen in Abhängigkeit von der Eingangsspannung erreichen, wobei durch eine entsprechende Festlegung der Referenzspannung eine optimale Anpassung an die jeweiligen Verhältnisse im Hinblick auf die Verlustleistungsbilanz möglich ist.

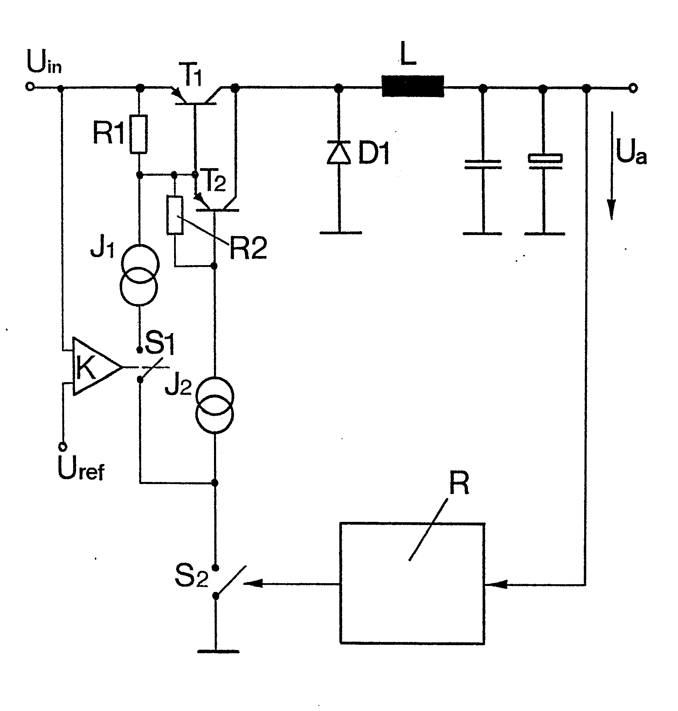

Die Erfindung wird nun an Hand der Zeichnung näher erläutert, die einen erfindungsgemäßen Schalter zeigt.

Die beiden Transistoren T1 und T2 sind in Darlington-Schaltung geschaltet, wobei die Eingangs- und die Ausgangsspannung an dem Transistor T1 anstehen. Die Basis des Transistors T1 ist außer mit dem Emitter des Transistors T2 noch mit einem vom Schalter S1 gesteuerten und eine Stromquelle J1 aufweisenden Strompfad verbunden, wobei die Stromquelle J1 gegebenenfalls durch einen Widerstand gebildet sein kann. Jedenfalls erlaubt dieser Strompfad eine Versorgung des Transistors T1 mit Basisstrom.

Der Schalter S1 wird von einem Komparator K gesteuert, der die Eingangsspannung $U_{in}$ mit einer Referenzspannung $U_{ref}$ vergleicht und den Schalter S1 schließt, wenn die Eingangsspannung unter der Referenzspannung liegt.

Der Schalter S1 ist weiters mit dem Steuerschalter S2 und dem zur Versorgung des Transistors T2 mit Basisstrom vorgesehenen Strompfad verbunden, der ebenfalls eine Stromquelle J2 aufweist, die auch durch einen Widerstand gebildet sein kann. Gesteuert wird der Steuerschalter S2 von einem Regler R der das Tastverhältnis der Betätigung des Steuerschalters S2 in Abhängigkeit von der Ausgangsschaltung Ua regelt, um diese konstant auf einen vorgegebenen Wert zu halten.

Mit dem im wesentlichen durch die beiden Transistoren T1 und T2 gebildeten elektronischen Schalter wird beim dargestellen Ausführungsbeispiel ein durch die Diode D1, die Induktivität L und dem Kondensator gebildeter Durchflußwandler betrieben, an dessen Ausgang die Spannung für den Regler R abgenommen und an den die nicht dargestellte Last angeschlossen wird.

Parallel zu den Emitter-Basisdioden der Transistoren T1 und T2 sind beim dargestellten Ausführungsbeispiel Widerstände R1 und R2 geschaltet, die jedoch nicht unbedingt erforderlich sind.

Ist die Eingangsspannung $U_{in}$ kleiner als die Referenzspannung $U_{ref}$ so ist der Schalter S1 geschlossen. Schließt nun auch der Steuerschalter S2, so wird die Basis des Transistors T1 über den Weg Masse - Steuerschalter S2 - Schalter S1 - Stromquelle J1 mit Basisstrom versorgt und geht in den leitenden Zustand über. Der Transistor T2 ist in diesem Falle trotz seiner Versorgung mit Basisstrom über den Weg Masse - Steuerschalter S2 - Stromquelle J2 bedeutungslos.

Dabei ergeben sich Verluste im Transistor T1, die durch den Laststrom und die über der Emitter-Kollektorstrecke anstehenden Spannung bedingt sind und sich aus dem Produkt dieser Werte errechnen, wobei üblicherweise mit einem Spannungsabfall· über der Emitter-Kollektorstrecke von ca. 0,3 - 0,4V zu rechnen ist, wenn der Transistor in die Sättigung getrieben wird.

Weiters entstehen in der Ansteuerung der beiden Transistoren Verluste. Diese Treiberverluste errechnen sich aus dem Produkt aus der Eingangsspannung und der Summe der Basisströme der beiden Transistoren T1 und T2, wobei der Basisstrom des Transistors T2 um den Verstärkungsfaktor des Transistors T2 kleiner als jener des Transistors T1 ist und praktisch vernachlässigbar ist.

Übersteigt dagegen die Eingangsspannung die Referenzspannung, so bleibt der Schalter S 1 geöffnet. Schließt nun der Steuerschalter S2 im Takt, so werden die Transistoren T1 und T2 in Darlington-Schaltung betrieben und nur der Transistor T2 mit Basisstrom versorgt. Dabei entstehen bedingt durch die hohe Verstärkung dieser Anordnung, welche gleich dem Produkt der Verstärkungsfaktoren beider Transistoren ist, nur geringe Treiberverluste. Allerdings entsteht über den beiden Transistoren T1 und T2 ein hoher Spannungsabfall, so daß auch die vom Laststrom abhängigen Verluste, verglichen mit dem zuvor beschriebenen Betriebszustand vergrößern. Dieser Spannungsabfall setzt sich aus der Flußspannung der Emitter-Basisdiode von T1 für die etwa 0,7 V zu rechnen ist und der in Sättigung befindlichen Emitter-Kollektorstrecke des Transistors T2 zusammen, die etwa 0,3 - 0,4 V beträgt und zur Spannung an der Emitter-Basisdiode von T1 addiert werden muß, so daß sich ein gesamter Spannungsabfall über den Emitter des Transistors T1 und dem Kollektor des Transistors T2 von etwa 1 V ergibt.

Damit lassen sich die gesamten Verluste optimieren. Es genügt dabei je nach den Gegebenheiten die Referenzspannung entsprechend festzulegen. Außerdem ergibt sich durch die Umschaltung des Betriebszustandes des elektronischen Schalters die Möglichkeit, den Schalter sowohl bei einer geringen Differenz zwischen der Eingangs- und Ausgangsspannung, als auch bei einer großen derartigen Differenz problemlos einzusetzen.

Patentansprüche


1. Elektronischer Schalter, insbesondere für ein Schaltnetzteil, zum Schalten eines von der Masse verschiedenen
Potentials, dadurch gekennzeichnet, daß der Schalter zwei in
Darlington-Scahltung angeordnete Transistoren (T1, T2) aufweist und jener Transistor (T1) an dessen Emitter-Kollektorstrecke die Eingangs- und die Ausgangsspannung ansteht, mit
seiner Basis außer mit der Emitter-Kollektorstrecke des
zweiten Transistors (T2) auch/einem über einen Schalter (S1)
mit
steuerbaren, gegebenenfalls eine Stromquelle (J1) aufweisenden Strompfad zur Versorgung mit Basistrom verbindbar
ist, der mit einem, gegebenenfalls von einem Regler (R) beaufschlagten, Steuerschalter (S2) verbunden ist, an dem auch
der mit der Basis des zweiten Transistors (T2) verbundene,
gegebenenfalls eine Stromquelle (J2) aufweisende Strompfad
zur Versorgung mit Basisstrom verbunden ist.


2. Elektronischer Schalter nach Anspruch 1, dadurch gekennzeichnet, daß der Schalter (S1) über den an die Basis jenes
Transistors (T1), an dessen Emitter-Kollektorstrecke die Eingangs- und Ausgangsspannung ansteht, angeschlossenen Strompfad schaltet, von einem Komparator (K) gesteuert ist, der
die Eingangsspannung des elektronischen Schalters mit einer
Refernzspannung vergleicht.